# EUROPEAN PATENT SPECIFICATION

(11) **EP 2 899 479 B1**
(45) Date of publication and mention of the grant of the patent: **28.06.2017**
(21) Application number: 15150236.6
(22) Date of filing: 07.01.2015
(51) Int. Cl.: F25D 11/02, F25D 29/00

(54) **A method of operation for refrigeration devices**
Verfahren zum Betrieb von Kühlvorrichtungen
Procédé de fonctionnement pour dispositifs de réfrigération

(30) Priority: 28.01.2014 TR 201400968
(43) Date of publication of application: 29.07.2015
(73) Proprietor: Vestel Beyaz Esya Sanayi ve Ticaret A.S., 45030 Manisa (TR)
(72) Inventor: Yerli, Baki, 45030 Manisa (TR)
(74) Representative: Cayli, Hülya

(56) References cited:
- EP-A2- 0 707 183
- WO-A1-2013/160109
- DE-A1-102011 075 004
- US-A- 4 750 332
- US-A1- 2002 026 804

## Description

### Field of the Invention

The present invention relates to a method of operation which increases the freezing capacity of a refrigeration device.

### Background Art

A refrigeration process (refrigeration cycle) in the refrigeration devices such as refrigerators is generally performed by a refrigeration system comprising a compressor, a condenser, a capillary pipe and an evaporator unit. Accordingly, in the refrigeration cycle, the heat of a refrigerant leaving the compressor as it is hot is transferred to the outer environment, while it is being passed through the condenser, where it is condensed and cooled to a certain extent. Thereafter, the refrigerant is passed through the capillary pipe such that its pressure is reduced and then it reaches to the evaporator. Here the refrigerant easily evaporates and converts into the gaseous phase, due to its low pressure and the heat received from the inner medium (chambers) of the device. In the evaporator, the refrigerant that cools the chambers, due to the heat received from the chambers, is returned back to the compressor so that the known refrigeration cycle is completed, which is maintained cyclically.

The refrigeration devices typically comprise at least two chambers with different temperature values. One of the said chambers is a cooling chamber, the temperature value of which is maintained at +4 to 0 °C and the other one is a freezing chamber, whose the temperature value is maintained at -15 to -18 °C. In the refrigeration devices comprising two or more chambers with different temperature values, separate refrigeration cycles may be used to cool each chamber or a single refrigeration cycle may be used to adjust the temperature of the two chambers. In the refrigeration devices with separate refrigeration cycles for each chamber, the temperature of the chambers may be controlled independent from each other whereas in the refrigeration devices with a single refrigeration cycle, the temperature of different chambers is adjusted dependent upon each other.

This dependency of the temperature of the chambers in the refrigeration devices comprising at least two chambers with different temperature values and a single refrigeration cycle for adjusting the temperature of the chambers results in a limited amount of product to be stored in the chambers. For example, in a refrigeration device comprising a freezing chamber that must have a temperature value below -15 °C and a cooling chamber that must have a temperature value above 0 °C, if an amount of product exceeding the capacity is placed into the freezing chamber, the freezing chamber must be cooled for a longer period of time than needed so as to bring it to a temperature value of -15 °C. In other words, the refrigeration system must be operated for a longer period of time than the normal one. However, operation of the refrigeration system for a long period of time is not preferred as it causes the temperature of the cooling chamber to reduce below 0 °C. This limits the amount of product to be stored in the freezing chamber of the conventional refrigeration devices to a certain value (i.e. 2 Kg).

In the prior art applications, various applications are available for increasing the volume of product to be stored in the freezing chamber of the refrigeration devices, as disclosed in KR20130061506A. However, said applications provide solution only to the problem of physically increasing the volume of the freezing chamber. In other words, no solution is provided in the applications known from the art for increasing the amount of product to be stored in the freezing chamber, in weight.

### Brief Description of the Invention

With the present invention, there is provided a method of operation for increasing the amount of product to be stored in a second chamber of a refrigeration device comprising at least a first chamber with a relatively high operation temperature; at least a second chamber with an operation temperature lower than the first chamber; a refrigeration cycle cooling said chambers and having a compressor, a condenser, a capillary pipe and an evaporator; and at least one temperature sensor measuring the temperature of a chamber and controlling the operation of the compressor based on the measured temperature. The said method of operation comprises the steps of operating said compressor with the start of the refrigeration device; sensing the temperature of the chamber including the sensor by means of the said temperature sensor; controlling whether the sensed temperature value is higher than a predetermined target temperature; if the sensed temperature value is equal to or lower than the said target temperature, stopping operation of the compressor; re-sensing the temperature of the chamber including the sensor; re-controlling whether the sensed temperature value is higher than the target temperature; if the sensed temperature value is higher than the target temperature, returning back to the step of operating the compressor; if the sensed temperature value is not higher than the target temperature, returning back to the step of re-sensing the temperature of the chamber; if the temperature sensed in the step of controlling whether the temperature value of the chamber including the sensor is higher than the said target temperature is higher than the target temperature, controlling whether the continuous operation period of the compressor is higher than a predetermined t1 value; if the operation period of the compressor is lower than said t1 time, returning back to the step of measuring the temperature of the chamber including the sensor; if the operation period of the compressor is higher than said t1 time, stopping operation of the compressor; after the compressor is stopped, calculating the duration for which the compressor is kept at standby; controlling whether the calculated duration is lower than a predetermined t2 time; if the duration for which the compressor is kept at standby is lower than said t2 time, returning back to the step of calculating the duration for which the compressor is kept at standby; if the duration for which the compressor is kept at standby is equal to or higher than said t2 time, returning back to the step of operating the compressor.

In the traditional methods, a product of 2 Kg can be stored in the freezing chamber of a refrigeration device comprising at least two chambers with different temperature values and a single refrigeration cycle for adjusting the temperature of these chambers whereas a product of 3 Kg can be stored in the freezing chamber thanks to the operation method according to the present invention.

### Object of the Invention

An object of the present invention is to provide a method of operation for increasing the amount of product to be stored in a chamber with a lower temperature value, in a refrigeration device comprising at least two chambers with different temperature values and a single refrigeration cycle for adjusting the temperature of the chambers.

Another object of the present invention is to provide a method of operation wherein the temperature of the cooling chamber of a refrigeration device is prevented from decreasing below a desired value.

Another object of the present invention is to provide a method of operation wherein the temperature of the freezing chamber of a refrigeration device is prevented from increasing above a desired value.

### Description of the Drawings

An embodiment of the operation method according to the present invention is illustrated in the annexed drawing, wherein;

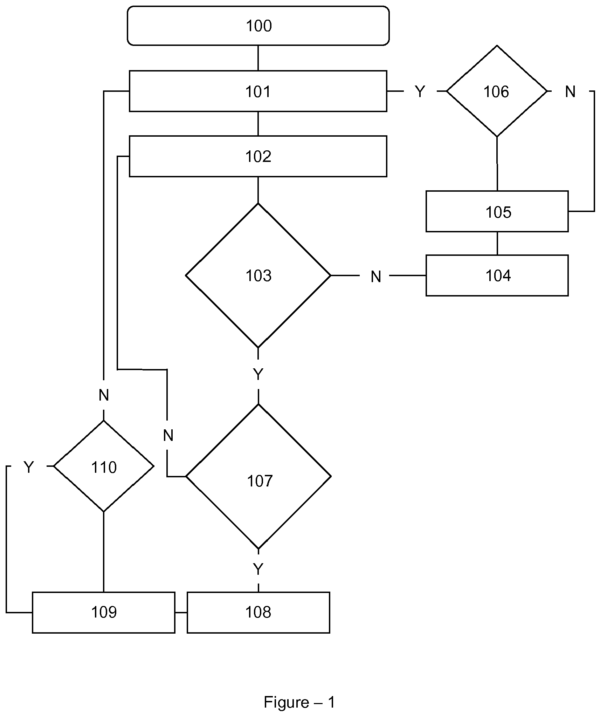

Figure 1 is a flow diagram of the inventive method.

All the parts illustrated in the drawing are individually assigned a reference numeral and the corresponding terms of these numbers are listed as follows:

| | |
|---|---|
| Start | (100) |
| Operate the compressor | (101) |
| Sense the temperature of the chamber | (102) |
| The temperature of the chamber is higher than the target temperature? | (103) |
| Stop the compressor | (104) |
| Re-sense the temperature of the chamber | (105) |
| The temperature of the chamber is higher than the target temperature? | (106) |
| Operation period is over t1 time? | (107) |
| Stop the compressor | (108) |
| Calculate the standby time | (109) |
| The standby time is lower than t2 time? | (110) |
| Yes | (Y) |
| No | (N) |

### Description of the Invention

The refrigeration devices may include two or more chambers with different temperature values. In the refrigeration devices comprising a single refrigeration cycle, the temperature of the chambers is dependent upon each other. Such dependency limits the amount of the product, in weight, to be stored especially in the chamber with lower temperature. Therefore, with the present invention, there is provided a method of operation for increasing the amount of product to be stored in the chamber of a refrigeration device with a lower temperature.

The operation method according to the present invention, as illustrated in figure 1 as an exemplary flow diagram, is designed for refrigeration devices comprising at least a first chamber (i.e. a cooling chamber) with a relatively high operation temperature (i.e. higher than 0 °C, preferably in the range of 0 to +4 °C); at least a second chamber (i.e. a freezing chamber) with an operation temperature lower than the first chamber (i.e. lower than -15 °C, preferably in the range of -15 to -18 °C); a refrigeration system cooling said chambers and having a compressor, a condenser, a capillary pipe and an evaporator; and at least one temperature sensor positioned in at least one of the chambers and measuring the temperature of a chamber (which may be the first chamber or the second chamber) so that based on the measured temperature, the operation of the compressor is controlled. In the said operation method, when the refrigeration device is started (100), the compressor is operated (101). After the compressor is operated, the temperature of the chamber including the sensor is sensed by the said temperature sensor (102). Then it is controlled whether the temperature value of the chamber including the sensor is higher than a predetermined target temperature (103). Here, if the said sensor is located in the first chamber, the target temperature is preferably selected to be 0 °C; whereas if it is located in the second chamber, then the target temperature is selected to be -15 °C. If the temperature of the chamber including the sensor is equal to or lower than the said target temperature, it is assumed that the chamber has reached to desired temperature and operation of the compressor is stopped (104). Thereafter, the temperature of the chamber including the sensor is re-sensed (105) and it is re-controlled whether the sensed temperature value is higher than the said target temperature (106). If the temperature of the chamber including the sensor is higher than the target temperature, it is returned back to the step of operating the compressor (101); and if the temperature of the chamber including the sensor is not higher than the target temperature, then it is returned back to the step of re-sensing the temperature of the chamber (105). If the temperature sensed in the step of controlling whether the temperature of the chamber including the sensor is higher than a predetermined target temperature (103) is higher than the target temperature, it is controlled whether the continuous operation period of the compressor is higher than a predetermined t1 value (107). If the operation period of the compressor is lower than said t1 time, it is returned back to the step of measuring the temperature of the chamber including the sensor (102). If the operation period of the compressor is higher than said t1 time, then operation of the compressor is stopped (108). After the compressor is stopped, the duration for which the compressor is kept at standby is calculated (109). Then it is controlled whether the calculated time is lower than a predetermined t2 time (110). If the duration for which the compressor is kept at standby is lower than said t2 time, it is returned back to the step of calculating the duration for which the compressor is kept at standby (109). If the duration for which the compressor is kept at standby is equal to or higher than said t2 time, it is returned back to the step of operating the compressor (101).

In the operation method according to the present invention, when the compressor is continuously operated for a predetermined t1 time, the operation of the compressor is stopped for a t2 time. Throughout t2 time for which the operation of the compressor is stopped, the temperature of the first chamber is increased more than that of the second chamber. In other words, when the compressor is operated once again at the end of the t2 time, the second chamber maintains its temperature better than the first chamber. Thus, even if the amount of product in the second chamber (freezing chamber) is high, the temperature of the first chamber (cooling chamber) is prevented from decreasing below 0 °C. In other words, the amount of product to be stored in the second chamber (freezing chamber) is increased.

In an illustrative embodiment of the operation method according to the present invention, t1 value is selected to be in the range of 3-5 hours (more particularly 4 hours) whereas t2 value is selected to be in the range of 15-45 minutes (more particularly 30 minutes). The amount of product to be stored in the freezing chamber of a refrigeration device operating according to the traditional methods is, for example, 2 Kg whereas the amount of product to be stored in the freezing chamber in this embodiment is 3 Kg. In other words, with the operation method according to the present invention, the amount of product to be stored in the freezing chamber of the refrigeration device may be increased 50%. While providing such an increase, the temperature of the cooling chamber is maintained at 0 to +4 °C whereas the temperature of the freezing chamber is maintained at -15 to -18 °C.

## Claims

1. A method of operation for use in a refrigeration device comprising at least a first chamber with a relatively high operation temperature; at least a second chamber with an operation temperature lower than the first chamber; a refrigeration system cooling said chambers and having a compressor, a condenser, a capillary pipe and an evaporator; and at least one temperature sensor positioned in at least one of the chambers and measuring the temperature of a chamber so that the operation of the compressor is controlled based on the measured temperature, wherein the amount of product to be stored in a second chamber of a refrigeration device is increased without causing the operation temperature of the first chamber to drop below a predetermined value, the method of operation being **characterized by** comprising the following steps in the order given;
- operating said compressor (101) with the start of the refrigeration device (100);
- sensing the temperature of the chamber including the sensor by means of the said temperature sensor (102);
- controlling whether the sensed temperature value is higher than a predetermined target temperature (103);
- if the sensed temperature is equal to or lower than the said target temperature, stopping operation of the compressor (104);
- re-sensing the temperature of the chamber including the sensor (105) after stopping the operation of the compressor;
- re-controlling whether the temperature value sensed in the step (105) is higher than the target temperature (106);
- if the temperature value sensed in the step (105) is higher than the target temperature, returning back to the step (101) of operating the compressor;
- if the temperature value sensed in the step (105) is not higher than the target temperature, re-sensing (105) the temperature of the chamber;
- if the temperature sensed in the step (103) of controlling whether the temperature value of the chamber including the sensor is higher than the said target temperature is higher than the target temperature, controlling whether the continuous operation period of the compressor is higher than a predetermined t1 value (107) ;
- if the operation period of the compressor is lower than said t1 time, returning back to the step of measuring (102) the temperature of the chamber including the sensor;
- if the operation period of the compressor is higher than said t1 time, stopping operation of the compressor (108);
- after the compressor is stopped, calculating the duration for which the compressor is kept at standby (109);
- controlling whether the calculated duration in the step (109) is lower than a predetermined t2 time (110);
- if the duration calculated in the step (109) for which the compressor is kept at standby is lower than said t2 time, returning back to the step (109) of calculating the duration for which the compressor is kept at standby;
- if the duration calculated in the step (109) for which the compressor is kept at standby is equal to or higher than said t2 time, returning back to the step (101) of operating the compressor.

2. A method of operation according to claim 1, **characterized in that** said t1 value is in the range of 3-5 hours.

3. A method of operation according to claim 1 or 2, **characterized in that** said t1 value is 4 hours.

4. A method of operation according to claim 1, **characterized in that** said t2 value is in the range of 15-45 minutes.

5. A method of operation according to claim 1, **characterized in that** said t2 value is 30 minutes.

6. A method of operation according to claim 1, **characterized in that** the operation temperature of the said first chamber is in the range of 0 to +4 °C.

7. A method of operation according to claim 1, **characterized in that** the operation temperature of the said second chamber is in the range of -15 to -18 °C.

8. A method of operation according to claim 1, **characterized in that** if the sensor is located in the first chamber, the said target temperature is 0 °C.

9. A method of operation according to claim 1, **characterized in that** if the sensor is located in the second chamber, the said target temperature is -15 °C.

## Patentansprüche

1. **Betriebsverfahren** zur Anwendung in einem Kältegerät, umfassend zumindest eine erste Kammer mit einer relativ hohen Betriebstemperatur; zumindest eine zweite Kammer mit einer Betriebstemperatur, die niedriger ist als die in der ersten Kammer; ein Kühlsystem, das die Kammern kühlt und einen Kompressor, einen Kondensator, ein Kapillarrohr und einen Verdampfer umfasst; und zumindest einen Temperatur-Sensor, der in zumindest einer der Kammern angeordnet ist und die Temperatur einer Kammer misst, sodass der Betrieb des Kompressors auf Grundlage der gemessenen Temperatur geregelt wird, wobei die Menge eines in einer zweiten Kammer eines Kältegeräts zu lagernden Produkts erhöht wird, ohne ein Absinken der Betriebstemperatur der ersten Kammer unter einen vorbestimmten Wert zu verursachen, wobei das Betriebsverfahren durch die folgenden Schritte in dargestellter Reihenfolge gekennzeichnet ist;
- Betreiben des Kompressors (101) mit dem Start des Kältegeräts (100);
- Erfassen der Temperatur der Kammer mit dem Sensor durch den Temperatur-Sensor (102);
- Überprüfen, ob der erfasste Temperaturwert höher ist als eine vorbestimmte Zieltemperatur (103);
- Falls die erfasste Temperatur gleich oder kleiner ist als die Zieltemperatur, Stoppen des Betriebs des Kompressors (104);
- Erneutes Erfassen der Temperatur der Kammer mit dem Sensor (105) nach dem Stoppen des Betriebs des Kompressors;
- Erneutes Überprüfen, ob der in Schritt (105) erfasste Temperaturwert höher ist als die Zieltemperatur (106);
- Falls der in Schritt (105) erfasste Temperaturwert höher ist als die Zieltemperatur, Rückkehren zu dem Schritt (101) des Betriebs des Kompressors;
- Falls der in Schritt (105) erfasste Temperaturwert nicht höher ist als die Zieltemperatur, erneutes Erfassen (105) der Temperatur der Kammer;
- Falls die Temperatur, die in dem Schritt (103) des Überprüfens, ob der Temperaturwert der Kammer mit dem Sensor höher ist als die Zieltemperatur, erfasst wurde, höher ist als die Zieltemperatur, Überprüfen, ob die kontinuierliche Betriebsdauer des Kompressors höher ist als ein vorbestimmter Wert t1 (107);
- Falls die Betriebsdauer des Kompressors geringer ist als die Zeit t1, Rückkehren zu dem Schritt (102) des Messens der Temperatur der Kammer mit dem Sensor;
- Falls die Betriebsdauer des Kompressors höher ist als die Zeit t1, Stoppen des Betriebs des Kompressors (108);
- Nachdem der Kompressor gestoppt ist, Berechnen der Dauer, für die der Kompressor auf Standby gehalten wird (109);
- Überprüfen, ob die in Schritt (109) berechnete Dauer geringer ist als eine vorbestimmte Zeit t2 (110);
- Falls die in dem Schritt (109) berechnete Zeit, für die der Kompressor auf Standby gehalten wird, geringer ist als die Zeit t2, Rückkehren zu dem Schritt (109) des Berechnens der Dauer, für die der Kompressor auf Standby gehalten wird;
- Falls die in dem Schritt (109) berechnete Zeit, für die der Kompressor auf Standby gehalten wird, gleich oder größer ist als die Zeit t2, Rückkehren zu dem Schritt (101) des Betriebs des Kompressors.

2. Betriebsverfahren nach Anspruch 1, **dadurch gekennzeichnet, dass** der Wert t1 im Bereich von 3 bis 5 Stunden liegt.

3. Betriebsverfahren nach einem der Ansprüche 1 oder 2, **dadurch gekennzeichnet, dass** der Wert t1 4 Stunden beträgt.

4. Betriebsverfahren nach Anspruch 1, **dadurch gekennzeichnet, dass** der Wert t2 im Bereich von 15 bis 45 Minuten liegt.

5. Betriebsverfahren nach Anspruch 1, **dadurch gekennzeichnet, dass** der Wert t2 30 Minuten beträgt.

6. Betriebsverfahren nach Anspruch 1, **dadurch gekennzeichnet, dass** die Betriebstemperatur der ersten Kammer im Bereich von 0 bis +4 °C liegt.

7. Betriebsverfahren nach Anspruch 1, **dadurch gekennzeichnet, dass** die Betriebstemperatur der zweiten Kammer im Bereich von -15 bis -18 °C liegt.

8. Betriebsverfahren nach Anspruch 1, **dadurch gekennzeichnet, dass** falls der Sensor in der ersten Kammer angeordnet ist, die Zieltemperatur 0 °C beträgt.

9. Betriebsverfahren nach Anspruch 1, **dadurch gekennzeichnet, dass** falls der Sensor in der zweiten Kammer angeordnet ist, die Zieltemperatur -15 °C beträgt.

## Revendications

1. Procédé de fonctionnement à utiliser dans un dispositif de réfrigération comprenant au moins une première chambre ayant une température de fonctionnement relativement élevée ; au moins une deuxième chambre ayant une température de fonctionnement inférieure à celle de la première chambre ; un système de réfrigération refroidissant lesdites chambres et comportant un compresseur, un condenseur, un conduit capillaire et un évaporateur ; et au moins un capteur de température positionné dans au moins une des chambres et mesurant la température d'une chambre de telle sorte que le fonctionnement du compresseur est commandé sur la base de la température mesurée, dans lequel la quantité de produit à stocker dans une deuxième chambre d'un dispositif de réfrigération est augmentée sans amener la température de fonctionnement de la première chambre à tomber sous une valeur prédéterminée, le procédé de fonctionnement étant **caractérisé en ce qu'**il comprend les étapes suivantes dans l'ordre donné :
- faire fonctionner ledit compresseur (101) avec le démarrage du dispositif de réfrigération (100) ;
- détecter la température de la chambre incluant le capteur au moyen dudit capteur de température (102) ;
- contrôler si la valeur de température détectée est supérieure à une température cible prédéterminée (103) ;
- si la température détectée est égale ou inférieure à ladite température cible, arrêter le fonctionnement du compresseur (104) ;
- redétecter la température de la chambre incluant le capteur (105) après l'arrêt du fonctionnement du compresseur ;
- recontrôler si la valeur de température détectée à l'étape (105) est supérieure à la température cible (106) ;
- si la valeur de température détectée à l'étape (105) est supérieure à la température cible, retourner à l'étape (101) de fonctionnement du compresseur ;
- si la valeur de température détectée à l'étape (105) n'est pas supérieure à la température cible, redétecter (105) la température de la chambre ;
- si la température détectée à l'étape (103) consistant à contrôler si la valeur de température de la chambre incluant le capteur est supérieure à ladite température cible est supérieure à la température cible, contrôler si la période de fonctionnement continu du compresseur est supérieure à une valeur t1 prédéterminée (107) ;
- si la période de fonctionnement du compresseur est inférieure audit temps t1, retourner à l'étape de mesure (102) de la température de la chambre incluant le capteur ;
- si la période de fonctionnement du compresseur est supérieure audit temps t1, arrêter le fonctionnement du compresseur (108) ;
- après l'arrêt du compresseur, calculer la durée pendant laquelle le compresseur est maintenu en veille (109) ;
- contrôler si la durée calculée à l'étape (109) est inférieure à un temps t2 prédéterminé (110) ;
- si la durée calculée à l'étape (109) pendant laquelle le compresseur est maintenu en veille est inférieure audit temps t2, retourner à l'étape (109) de calcul de la durée pendant laquelle le compresseur est maintenu en veille ;
- si la durée calculée à l'étape (109) pendant laquelle le compresseur est maintenu en veille est égale ou supérieure audit temps t2, retourner à l'étape (101) de fonctionnement du compresseur.

2. Procédé de fonctionnement selon la revendication 1, **caractérisé en ce que** ladite valeur t1 se trouve dans la plage de 3-5 heures.

3. Procédé de fonctionnement selon la revendication 1 ou 2, **caractérisé en ce que** ladite valeur t1 est de 4 heures.

4. Procédé de fonctionnement selon la revendication 1, **caractérisé en ce que** ladite valeur t2 se trouve dans la plage de 15-45 minutes.

5. Procédé de fonctionnement selon la revendication 1, **caractérisé en ce que** ladite valeur t2 est de 30 minutes.

6. Procédé de fonctionnement selon la revendication 1, **caractérisé en ce que** la température de fonctionnement de ladite première chambre se trouve dans la plage de 0 à +4 °C.

7. Procédé de fonctionnement selon la revendication 1, **caractérisé en ce que** la température de fonctionnement de ladite deuxième chambre se trouve dans la plage de - 15à-18°C.

8. Procédé de fonctionnement selon la revendication 1, **caractérisé en ce que**, si le capteur se situe dans la première chambre, ladite température cible est de 0 °C.

9. Procédé de fonctionnement selon la revendication 1, **caractérisé en ce que**, si le capteur se situe dans la deuxième chambre, ladite température cible est de -15 °C.
